Europäisches Patentamt

(19) European Patent Office

Office européen des brevets

(11) Veröffentlichungsnummer: **0 013 571**

**A1**

## (12) EUROPÄISCHE PATENTANMELDUNG

(21) Anmeldenummer: **80100109.0**

(22) Anmeldetag: **10.01.80**

(51) Int. Cl.³: **F 16 K 31/40**
**F 04 B 49/02**

(30) Priorität: **13.01.79 DE 2901242**

(43) Veröffentlichungstag der Anmeldung:
**23.07.80 Patentblatt 80/15**

(84) Benannte Vertragsstaaten:
**CH FR GB IT NL SE**

(71) Anmelder: **Boge Kompressoren Otto Boge GmbH & Co. KG**
**Meller Strasse 2**
**D-4800 Bielefeld 1(DE)**

(72) Erfinder: **Kuhn, Wolfgang, Ing.(grad.)**
**Astastrasse 25**
**D-4800 Bielefeld 13(DE)**

(72) Erfinder: **Schoch, Gerhard**
**Borweg 38**
**D 4970 Bad Ogenhausen(DE)**

(72) Erfinder: **Thierfelder, Karl, Ing. (grad.)**
**Lange Tecke 11**
**D-4902 Bad Salzuflen(DE)**

(74) Vertreter: **Hoefer, Theodor, Dipl.-Ing.**
**Kreuzstrasse 32**
**D-4800 Bielefeld(DE)**

(54) **Entlüftungsventil.**

㊾ Ein Entlüftungsventil (10) für eine Verdichteranlage zum Verdichten von gasförmigem Medium wie Luft kann in eine Druckleitung (13) nahezu am Ausgang des Verdichters (11) zwischengeschaltet werden. In dem Gehäuse (22) des Entlüftungsventils (10) ist ein die Druckleitung (13) verbindender Eintrittsraum (31) angeordnet, der in einen Zylinderraum (34) mündet, in dem ein Ventilteller (35) schwimmend (verschiebbar) lagert und mittels eines Elektromagneten (21) bewegbar ist. Dieser Ventilteller (35) öffnet einen um den Eintrittsraum (31) ringförmig angeordneten Austrittskanal (49) zur Entlüftung der Druckleitung (13) bzw. schließt den Austrittskanal (49) zum Aufbau des Gasdruckes.

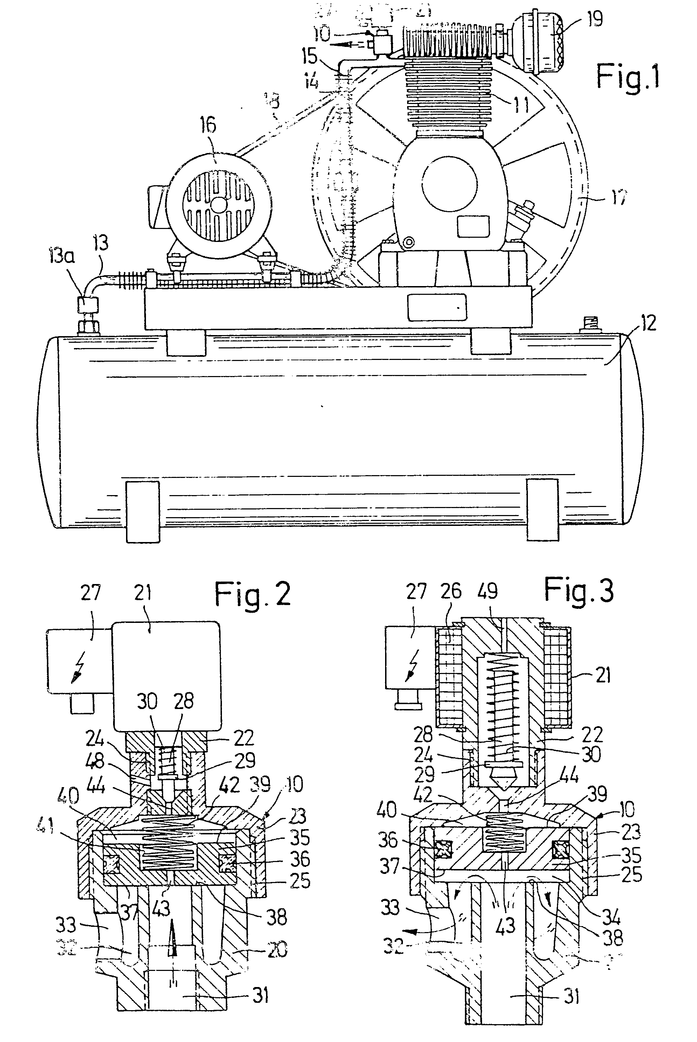

27 26 49 Fig. 3

EP 0 013 571 A1

BAD ORIGINAL

-1-

Firma BOGE KOMPRESSOREN Otto Boge GmbH & Co. KG,
Meller Straße 2, 48oo Bielefeld 1

_____

Entlüftungsventil

_____

Die Erfindung betrifft ein Entlüftungsventil für eine Verdichteranlage zum Einbau auf der Druckseite des Verdichters.

Bei der Verdichtung von Gasen, insbesondere von Gasgemischen wie feuchter Luft, ist es erforderlich, die sich durch die Verdichtung erwärmte und nach dem Austritt aus dem Verdichter wieder abkühlende Luft irgendwann von dem Kondensat zu trennen, welches sich bei der Abkühlung bildet. Bei bekannten Kompressoranlagen ist die Druckleitung, die den Austritt des Kompressors mit dem Druckbehälter verbindet, als Kühlrohr ausgebildet, welches an der äußeren Oberfläche mit Kühlrippen versehen ist. Dieses Kühlrohr ist in seiner Länge so bemessen, daß eine genügende Abkühlung der verdichteten Luft erfolgt ist, wenn die verdichtete Luft das Kühlrohr durchströmt hat und in den Druckbehälter eintritt.

Zwischen dem Ende des Kühlrohres und dem Eintritt in den Druckbehälter ist üblicherweise ein Ventil angeordnet, welches einmal die vom Verdichter geförderte Luft nach außen abströmen und expandieren läßt, wenn der Druckbehälter die gewünschte Menge an verdichteter Luft enthält und damit den gewünschten Innendruck erreicht hat. In diesem Fall soll der Verdichter im Leerlauf weiterarbeiten können, ohne daß sein Antrieb abgeschaltet zu werden braucht. Wenn der gewünschte Behälterdruck erreicht ist, soll das Ventil zum anderen im Aussetzbetrieb die Druckleitung entlüften, so daß der Kompressor beim Wiederanlauf nicht sofort gegen den Behälterdruck zu arbeiten braucht. Als solche Ventile sind bisher elektromagnetische Membranventile eingesetzt worden, die unmittelbar am Eintritt in den Druckbehälter angeordnet wurden, weil sie bei den am Austritt aus dem Verdichter auftretenden hohen Verdichtungstemperaturen, die in der Größenordnung von 160 - 220° C liegen können, zerstört werden würden. Daher muß die vom Verdichter geförderte Luft auch bei Leerlaufbetrieb noch das Kühlrohr durchströmen, ehe sie ins Freie expandieren kann. Der Verdichter muß also die Strömungsverluste der verdichteten Luft in dem Kühlrohr liefern, so daß er einen hohen Leistungsbedarf auch im Leerlauf hat. Das am Ende des Kühlrohres in der verdichteten Luft enthaltene Kondensat kann bei elektromagnetischen Ventilen leicht zu Betriebsstörungen führen.

Der Erfindung liegt die Aufgabe zugrunde, ein gegenüber bekannten elektromagnetischen Ventilen konstruktiv vereinfachtes Ventil zu schaffen, welches geeignet ist, unmittelbar am Ausgang des Verdichters, also auf dessen Druckseite, angeordnet zu werden, um das Auftreten von Kondensat im Ventil zu vermeiden. Außerdem soll das Ventil die Strömungsverluste der bei Leerlauf ins Freie abströmenden verdichteten Luft verringern.

Erfindungsgemäß wird ein Entlüftungsventil vorgeschlagen, welches einen für das verdichtete Gas in einem Ventilgehäuse angeordneten zentralen Eintrittsraum, einen diesen ringförmig umgebenden Austrittsraum und einen diese Räume miteinander verbindenden Zylinderraum enthält, in welchem ein an seiner unteren Stirnfläche den Eintrittsraum und den Austrittsraum absperrender oder verbindender Ventilteller verschiebbar angeordnet ist, der auf der Seite seiner anderen, oberen Stirnfläche von einem durch einen Elektromagneten beeinflußbaren steuernden Gasdruck beaufschlagt ist.

Bevorzugt besteht der Elektromagnet aus einem eine Spule

- 4 -

enthaltenden Gehäuse, in welchem ein zu dem Ventilteller
koaxialer stabförmiger Anker in axialer Richtung verschiebbar angeordnet ist.

Weitere bevorzugte Ausführungsformen der Erfindung sind in
den Schutzansprüchen enthalten.

Der Schutzumfang der Erfindung erstreckt sich nicht nur auf
die beanspruchten Einzelmerkmale, sondern auch auf deren
Kombination.

- 5 -

Ausführungsbeispiele der Erfindung sind in der Zeichnung dargestellt und werden im folgenden näher beschrieben. Es zeigen:

Fig. 1 eine Ansicht einer Verdichteranlage mit dem Entlüftungsventil;

Fig. 2-6 fünf verschiedene Ausführungsformen des Entlüftungsventiles, jeweils in einem senkrechten Schnitt darge- stellt.

Das erfindungsgemäße Entlüftungsventil 1o ist unmittelbar am Ausgang eines Verdichters 11 auf dessen Druckseite angeordnet. Der Verdichter 11 ist auf einem Druckbehälter 12 befestigt, welcher mit dem Verdichter 11 über das Entlüftungsventil 1o und eine sich daran anschließende Druckleitung 13 verbunden ist. Diese ist als Kühlrohr 14 mit an der äußeren Oberfläche angeordneten Kühlrippen 15 ausgebildet. Oberhalb des Druckbehälters 12 sind der zum Verdichter 11 gehörende Antriebsmotor 16, das Schwungrad 17 des Verdichters und der Treibriemen 18 angeordnet, welcher das Drehmoment vom Antriebsmotor 16 auf das Schwungrad 17 überträgt. Auf der Saugseite ist der Verdichter 11 mit einem Ansaugfilter 19 ausgestattet.

Jede Bauart des erfindungsgemäßen Entlüftungsventils 1o ist aus einem Ventilgehäuse 2o, einem Elektromagneten 21 und einer das Gehäuse 22 des Elektromagneten 21 mit dem Ventilgehäuse 2o verbindenden Ventilkappe 23 aufgebaut. Das Ventilgehäuse 2o, die Ventilkappe 23 und das Gehäuse 22 sind so
hintereinander angeordnet, daß sie eine gemeinsame mittlere
Achse aufweisen. Die Ventilkappe 23 ist an ihrem oberen Ende
über ein Gewinde 24 mit dem Gehäuse 22 verschraubt und an
ihrem unteren Ende über ein Gewinde 25 mit dem Ventilgehäuse
2o verschraubt.

Der Elektromagnet 21 enthält eine Spule 26 und einen
elektrischen Anschlußkasten 27 für die Versorgung der Spule
26 mit einer elektrischen Spannung. In dem Gehäuse 22 ist
koaxial ein Anker 28 angeordnet, der von der Spule 26 umgeben wird. Er kann sich in dem Gehäuse 22 in axialer Richtung bewegen. Der Anker 28 trägt an seinem der Ventilkappe
23 zugewandten Ende einen Bund 29 und ist von einer Druckfeder 3o umgeben, die sich an dem Bund 29 mit ihrem einen
Ende abstützt, während sie sich mit ihrem anderen Ende an
der Innenseite des Gehäuses 22 abstützt.

Das Ventilgehäuse 2o enthält einen zentralen Eintrittsraum
31 und einen diesen auf seiner Länge teilweise ringförmig
umgebenden Austrittsraum 32. Der Eintrittsraum 31 ist am
unteren Ende des Entlüftungsventiles mit der Druckseite des
Verdichters verbunden. Der Austrittsraum 32 ist über eine
Auslaßöffnung 33 mit der Außenluft verbunden. Der Eintrittsraum 31 und der Austrittsraum 32 münden oben in einen
Zylinderraum 34 ein, in dem ein Ventilteller 35 in senkrechter Richtung verschiebbar angeordnet ist. Der Ventilteller 35 teilt den Zylinderraum 34 in zwei Seiten auf, die mit Hilfe eines Dichtungsringes 36 voneinander abgedichtet sind, der in eine in Umfangsrichtung in den Ventilteller 35 eingearbeitete Nut eingesetzt ist. Der Dichtungsring 36 kann als Vierlippen-Dichtungsring ausgebildet sein. Der Ventilteller 35 unterbricht in seiner unteren Stellung mit seiner unteren Stirnfläche 37 die Verbindung von dem Eintrittsraum 31 in den Austrittsraum 32, in dem die Stirnfläche 37 an der ringförmigen Kante zwischen diesen beiden Räumen anliegt, die hier einen Ventilsitz 38 bildet. Wenn sich der Ventilteller 35 nach oben bewegt, gibt er an seiner unteren Stirnfläche 37 den Weg vom Eintrittsraum 31 in den Austrittsraum 32 frei. Oberhalb der oberen Stirnfläche 39 des Ventiltellers 35 ist ein in den Zylinderraum 34 übergehender Druckraum 4o vorgesehen. Dieser Druckraum besteht auch dann, wenn der Ventilteller 35 seine obere Endstellung eingenommen hat.

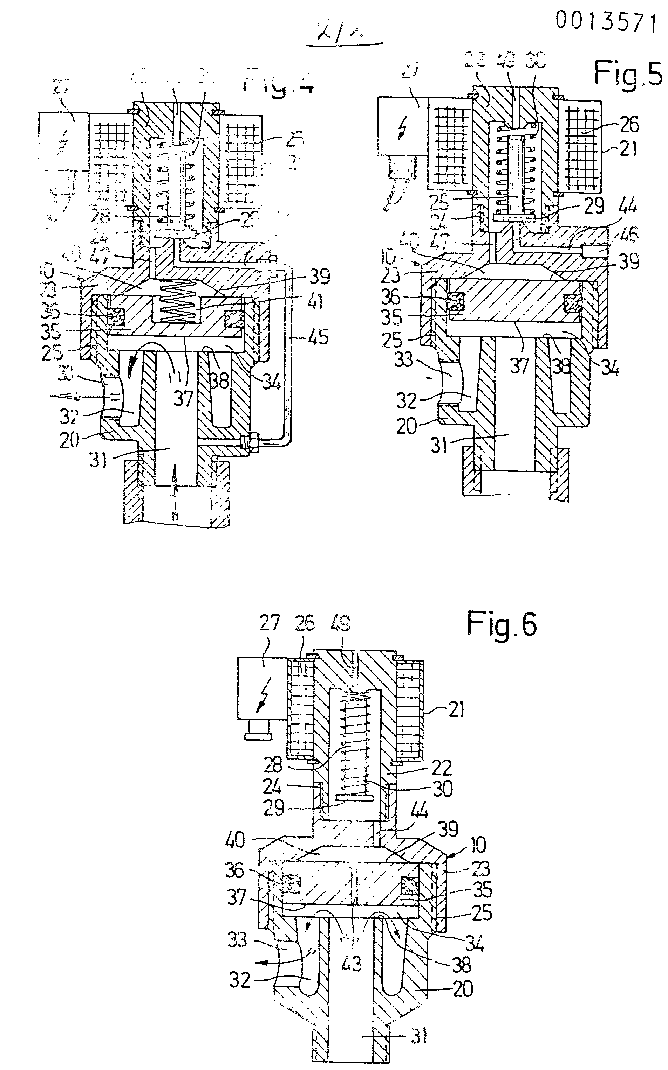

Bei den Ausführungsbeispielen nach den Fig. 2 bis 4 der Zeichnung ist der Ventilteller 35 mit einer koaxialen Ausnehmung 41 versehen, die zur Seite des Elektromagneten 21 hin geöffnet ist und in die eine Druckfeder 42 eingesetzt werden kann. Die Druckfeder 42 stützt sich an ihrem unteren Ende an dem Ventilteller 35 und an ihrem oberen Ende an der Ventilkappe 23 ab. Sie ist also bestrebt, den Ventilteller 35 in die Schließstellung von Eintrittsraum 31 und Austrittsraum 32 zu bewegen. Bei dem Ausführungsbeispiel gemäß Fig. 5 und 6 der Zeichnung ist eine solche Druckfeder nicht vorgesehen.

Gemäß Fig. 2,3 und 6 der Zeichnung weist der Ventilteller 35 eine zentrale Durchgangsbohrung 43 auf, durch diese sind die beiden Ventiltellerseiten mit der unteren Stirnfläche 37
und der oberen Stirnfläche 39 in dem Zylinderraum 34 miteinander verbunden.

Das Entlüftungsventil 1o hat im Bereich der Ventilkappe
23 einen Kanal 44, durch welchen steuernde Druckluft in
den Innenraum des Gehäuses 22 des Elektromagneten 21 eingeleitet werden kann. Dieser Kanal 44 wird in der unteren
Stellung des Ankers 28 von seinem unteren Ende verschlossen,
das ist dann der Fall, wenn der Elektromagnet 21 stromlos
ist, so daß die Druckfeder 3o den Anker 28 nach unten
drückt. Wird der Anker 28 infolge der Wirkung des Elektromagneten 21 nach oben bewegt, so wird der Kanal 44 freigegeben, es kann also Gas in den Innenraum des Gehäuses 22
und von dort ins Freie strömen.

Gemäß Fig. 2 und 3 mündet der Kanal 44 in den Druckraum 4o
oberhalb des Ventiltellers 35 ein. Gemäß Fig. 4 der Zeichnung ist der Kanal 44 mit Hilfe einer äußeren Verbindungsleitung 45 mit dem Eintrittsraum 31 verbunden, der Ventilteller 35 besitzt keine Durchgangsbohrung 43, und gemäß
Fig. 5 der Zeichnung ist der Kanal 44 für den Anschluß an
eine besondere, von dem Verdichterdruck unabhängige Druckgasquelle vorgesehen, er hat zu diesem Zweck in der Ventilkappe 23 einen Gewindeanschluß 46. Der Ventilteller 35 besitzt hier keine Durchgangsbohrung. In den Ausführungsbeispielen gemäß Fig. 4 und 5 der Zeichnung ist jedoch in
der Ventilkappe 23 jeweils eine den Innenraum des Gehäuses
22 mit dem Druckraum 4o verbindende Durchgangsbohrung 47
angeordnet.

Zum Auslaß der Steuerluft ins Freie enthält das Gehäuse 22 der fünf Ausführungsformen jeweils einen Austrittskanal
48 bzw. 49. Der Austrittskanal 48 gemäß Fig. 2 verläuft
seitlich zum Anker 28, während der Austrittskanal 49
gemäß Fig. 3 bis 6 koaxial zum Anker 28 und an dessen
oberem Ende im Gehäuse 22 angeordnet ist. Der Anker 28
kann den Austrittskanal 49 daher in seiner oberen Endstellung verschließen.

Das erfindungsgemäße Entlüftungsventil arbeitet wie folgt:

Vor Einschaltung des Antriebsmotors 16 ist der Druckbehälter 12 drucklos. Der Ventilteller 35 befindet sich infolge der Wirkung der Druckfeder 42 in seiner unteren
Stellung bzw. ohne Druckfeder in einer beliebigen Stellung, der Anker 28 befindet sich infolge der Druckfeder
3o in seiner unteren Stellung, da der Elektromagnet 21
stromlos ist. Wird nun der Verdichter 11 in Betrieb gesetzt, so wird Druckluft in den Eintrittsraum 31 gefördert,
die den Ventilteller 35 anhebt, gleichzeitig strömt die
Druckluft durch die Durchgangsbohrung 44, staut sich hinter
dem Ventilteller 35 und drückt diesen auf den Ventilsitz
38. Das Ventil ist geschlossen, die Verbindung Verdichter-
Druckluftbehälter ist hergestellt, so daß die Druckluft in
den Druckbehälter gefördert werden kann. Wenn der Druckbehälter 12 gefüllt ist, wird der Elektromagnet 21 in Tätigkeit gesetzt, so daß der Anker 28 nach oben gezogen wird
und den Kanal 44 freigibt.

Nun kann die hinter dem Ventilteller 35 gestaute Druckluft
durch den Kanal 44 in den Innenraum des Gehäuses 22 und von dort durch den Austrittskanal 48 bzw. 49 ins Freie entweichen. Der Ventilteller wird durch den Druck, der jetzt nur noch von dem Eintrittsraum (31) (Systemdruck) her ansteht, in seine obere Stellung gedrückt. Die Verbindung vom Eintrittsraum 31 zum Austrittsraum 32 ist hergestellt. Der Verdichter kann, da in der Druckleitung 13 eine Rückströmsperre 13a eingebaut ist, keine Druckluft mehr in den Behälter fördern, da diese vom Eintrittsraum 31 über den Austrittsraum 32 ins Freie entweicht. In der Praxis findet auch häufig die umgekehrte Funktion des Entlüftungsventiles ihre Anwendung, die Wirkungsweise dieses Ventiles ist in Fig. 6 dargestellt.

Gemäß Fig. 5 der Zeichnung wird die Bewegung des Ventiltellers 35 in die Absperrstellung mit Hilfe eines besonderen Steuerdrucksystems bewirkt, wobei die Druckluft bei betätigtem Magnet (in der Figur ist der Magnet in seiner Ruhestellung abgebildet) durch den Kanal 44 in den Innenraum des Gehäuses 22 und von dort durch die Durchgangsbohrung 47 in den Druckraum 4o oberhalb der oberen Stirnfläche 39 des Ventiltellers gelangt, wobei der Austrittskanal 49 verschlossen ist. Die von dem Verdichter geförderte Luft kann in diesem Fall nicht vom Eintrittsraum 31 über den Austrittsraum 32 ins Freie entweichen, der Verdichter fördert in den Druckbehälter.

Sobald aus dem Druckbehälter 12 Druckluft entnommen wird und der Druck dort auf einen unteren Einstellwert absinkt, wird der Elektromagnet 21 abgeschaltet. Nun drückt die Druckfeder 3o den Anker 28 auf die Öffnung des Kanals 44, so daß dieser abgesperrt ist. Der Austrittskanal 49 wird

...durch geöffnet und die Luft entweicht aus dem Druckraum
... in das Gehäuse 22 und von dort ins Freie, der Ventil-
...ller 35 wird durch den Systemdruck angehoben, also nach
oben bewegt, und der Weg vom Eintrittsraum 31 zum Austrittsraum 32 freigegeben. Der Verdichter fördert nun nicht
mehr auf den Behälter, sondern ins Freie.

- 12 -

Patentansprüche
_____

1. Entlüftungsventil für eine Verdichteranlage zum
Einbau auf der Druckseite des Verdichters, gekennzeichnet durch einen für das verdichtete Gas
in einem Ventilgehäuse angeordneten zentralen Eintrittsraum einen diesen ringförmig umgebenden Austrittsraum und einen diese Räume miteinander verbinden Zylinderraum, in welchem ein an seiner
unteren Stirnfläche den Eintrittsraum und den Austrittsraum absperrender oder verbindender Ventilteller verschiebbar angeordnet ist, der auf der
Seite seiner anderen, oberen Stirnfläche von einem
durch einen Elektromagneten beeinflußbaren steuernden Gasdruck beaufschlagt ist.

2. Entlüftungsventil nach Anspruch 1, dadurch gekennzeichnet, daß der Elektromagnet (21) aus einem eine
Spule (26) enthaltenden Gehäuse (22) besteht, in
welchem ein zu dem Ventilteller (35) koaxialer stabförmiger Anker (28) in axialer Richtung verschiebbar angeordnet und von einer Druckfeder (3o) umgeben
ist, die in dem Gehäuse (22) des Elektromagneten (21)
einerseits und an dem zum Ventilteller (35) weisenden Ende des Ankers (28) andererseits abgestützt ist.

3. Entlüftungsventil nach den Ansprüchen 1 und 2, dadurch gekennzeichnet, daß mit dem zum Ventilteller

-13-

(35) weisenden Ende des Ankers (28) ein in das Gehäuse (22) des Elektromagneten (21) einmündender Kanal (44) für das steuernde Druckgas verschließbar ist wobei der Kanal (44) für das steuernde Druckgas mit dem Zylinderraum (34) an der von dem Eintrittsraum (31) und dem Austrittsraum (32) abgewandten oberen Stirnfläche (39) des Ventiltellers (35) verbunden ist (Fig. 2 und 3).

4. Entlüftungsventil nach den Ansprüchen 1 bis 3, dadurch gekennzeichnet, daß der Kanal (44) für das steuernde Druckgas über eine Verbindungsleitung (45) mit dem Eintrittsraum (31) verbunden ist (Fig. 4).

5. Entlüftungsventil nach den Ansprüchen 1 bis 4, dadurch gekennzeichnet, daß der Kanal (44), für das steuernde Druckgas mit einem besonderen, von dem Verdichter (11) unabhängigen Drucksystem verbunden ist (Fig. 5).

6. Entlüftungsventil nach den Ansprüchen 1 bis 5, dadurch gekennzeichnet, daß der Innenraum des Gehäuses (22) des Elektromagneten (21) mit dem Zylinderraum (34) an der oberen Stirnfläche (39) des Ventiltellers (35) über eine in der Ventilkappe (23) angebrachte Durchgangsbohrung (47) verbunden ist, durch welche das Ventilgehäuse (20) und das Gehäuse (22) des Elektromagneten (21) aneinander befestigt sind (Fig. 4 und 5).

- 14 -

7.  Entlüftungsventil nach der Ansprüchen 1 bis 6, dadurch gekennzeichnet, daß der Ventilteller (35) mit einer zentralen, seine beiden Seiten im Zylinderraum (34) an den Stirnflächen (37,39) miteinander verbindenden Durchgangsbohrung (43) versehen ist, deren Querschnitt wesentlich kleiner als jeweils der Querschnitt des Eintrittsraumes (31) und des Austrittsraumes (32) ist (Fig. 2 und 3).

8.  Entlüftungsventil nach den Ansprüchen 1 bis 7, dadurch gekennzeichnet, daß der Innenraum des Gehäuses (22) des Elektromagneten (21) nach außen mittels eines Austrittskanals (48 bzw. 49) geöffnet ist, wobei der Austrittskanal (49) im Gehäuse (22) koaxial zu dem Anker (28) und im Bereich von dessen Ende angebracht ist, welches von dem Kanal (44) für das steuernde Druckgas abgewandt ist, wobei der Austrittskanal (49) von dem Anker (28) verschließbar ist (Fig. 4 und 5).

9.  Entlüftungsventil nach den Ansprüchen 1 bis 8, dadurch gekennzeichnet, daß der Ventilteller (35) an seiner oberen Stirnfläche (39) eine zentrale Ausnehmung (41) aufweist, in welche eine Druckfeder (42) eingesetzt ist, die sich mit ihrem vom Ventilteller (35) abgewandten Ende an der Ventilkappe (23) abstützt (Fig. 2,3 und 4) und der Ventilteller (35) mit Hilfe eines Vierlippen-Dichtungsringes (36)in dem Zylinderraum (34) abgedichtet ist, der eine in

-15-

- 15 -

Umfangsrichtung des Ventiltellers (35) eingearbeitete
Nut eingesetzt ist.

Entlüftungsventil nach den Ansprüchen 1 bis 9, dadurch gekennzeichnet, daß die Funktion des Magnetteils, Öffnen und Schließen des Kanals (44), der
Austrittskanäle (48 bzw. 49) zum Beispiel erfolgen
kann durch elektrische, pneumatische, hydraulische
oder mechanische Vorrichtungen und Kombinationen
aus diesen.

0013571

Fig.1

Fig. 2

Fig. 3

0013571

Fig.4

Fig.5

Fig.6

0013571

**Europäisches Patentamt** EUROPÄISCHER RECHERCHENBERICHT

Nummer der Anmeldung
EP 80 10 0109

| EINSCHLÄGIGE DOKUMENTE | | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | Betrifft Anspruch | |
| | FR - A - 2 129 576 (FUJIWARA)<br>* Seite 3, Zeile 22 - Seite 4, Zeile 24 * | 1-3,7 | F 16 K 31/40<br>F 04 B 49/02 |
| | -- | | |
| | GB - A - 1 011 597 (MAGNETIC VALVE COMP. LTD.)<br>* Insgesamt * | 1,2 | |
| | -- | | |
| | FR - A - 824 708 (FORGES ET ATELIERS DE CONSTRUCTIONS ELECTRIQUES DE JEUMONT)<br>* Insgesamt * | 1 | RECHERCHIERTE SACHGEBIETE (Int. Cl. ³)<br><br>F 16 K 31/00<br>F 04 B 49/00 |
| | -- | | |
| A | FR - A - 796 020 (WORTHINGTON-BATIGNOLLES)<br>* Seite 1, Zeile 34 - Seite 2, Zeile 65 * | 1 | |
| | ---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 14-04-1980 | VERELST |

EPA form 1503.1 06.78